# EUROPÄISCHE PATENTSCHRIFT

(11) **EP 2 746 929 B1**
(45) Veröffentlichungstag und Bekanntmachung des Hinweises auf die Patenterteilung: **29.04.2020**
(21) Anmeldenummer: 12197892.8
(22) Anmeldetag: 18.12.2012
(51) Int. Cl.: G06F 3/14, G05D 1/00, G06F 11/14, G06F 11/16, G06F 11/20

(54) **Anzeigevorrichtung sowie Verfahren zum Betreiben einer Anzeigevorrichtung**
Display device and method for operating a display device
Dispositif d'affichage et procédé de fonctionnement d'un dispositif d'affichage

(43) Veröffentlichungstag der Anmeldung: 25.06.2014
(73) Patentinhaber: SMR Patents S.à.r.l., 2453 Luxembourg (LU)
(72) Erfinder: Liesner, Alf, 73630 Remshalden (DE)
(74) Vertreter: Weber-Bruls, Dorothée

(56) Entgegenhaltungen:
- JP-A- 2003 087 781
- US-A1- 2006 150 002
- US-A1- 2012 038 685
- US-B1- 6 832 138
- US-B2- 7 190 390

## Beschreibung

Die Erfindung betrifft ein Verfahren zum Betreiben einer Anzeigevorrichtung für ein Kraftfahrzeug. Darüber hinaus betrifft die Erfindung eine Anzeigevorrichtung für ein Kraftfahrzeug, das zum Betreiben mit einem derartigen Verfahren konfiguriert ist.

Anzeigevorrichtungen sowie Verfahren zum Betreiben von Anzeigevorrichtungen sind bekannt.

So beschreibt die JP 2003087781 A ein Anzeigegerät für eine Fahrzeugumgebung, mit dem ein Fahrer auf einfache Weise eine tatsächliche Ansicht mit einem angezeigten Bild vergleichen kann, indem das Bild einer Infrarotkamera angezeigt wird, die versetzt auf der Seite eines Fahrersitzes angeordnet ist. Wenn das Bild der Infrarotkamera auf der Seite des Fahrersitzes versetzt auf der Seite des Fahrersitzes als Hauptbild angeordnet ist, setzt eine Bildzusammensetzungsvorrichtung ein von einer Infrarotkamera aufgenommenes Bild auf der gegenüberliegenden Seite zusammen und das Hauptbild zeigt das resultierende Bild. Ein zusammengesetztes digitales Signalbild wird in einem Bildspeicher gespeichert, durch einen D / A-Wandler in ein analoges Signalbild umgewandelt und in einen Anzeigebild-Eingabesteuerabschnitt eingegeben. Entsprechend dem Vorhandensein oder Nichtvorhandensein eines Fehlers einer Kamera, der von einer Fehlererfassungsschaltung und einer Fehlererfassungsschaltung erfasst wird, wählt ein Anzeigebild-Eingabesteuerungsteil aus den drei Arten von Bildern aus, welches Bild auszugeben ist, nämlich das Bild der Infrarotkamera auf der Seite des Fahrersitzes, das Bild der Infrarotkamera auf der gegenüberliegenden Seite oder das Bild, das von der Bildzusammensetzungsvorrichtung zusammengesetzt wurde.

Die US 2012/0038685 A1 offenbart eine Anzeigevorrichtung umfassend eine gemeinsame Anzeigetafel umfassend eine Vielzahl von nebeneinander angeordneten Anzeigebereichen, auf denen mittels den Anzeigebereichen zugeordneten Treibereinheiten verschiedene Bilder in den jeweiligen Anzeigebereichen angezeigt werden können, und mit einer Erfassungseinheit, mit der eine Abnormalität eines der Anzeigebereiche erfasst werden kann. Gegebenenfalls kann innerhalb der gemeinsamen Anzeigetafel ein in einem Anzeigebereich angezeigtes Bild in einem anderen Anzeigebereich der Anzeigetafel angezeigt werden.

Die US 7 190 390 B2 offenbart ein Flüssigkristalldisplaysystem mit einer Mehrzahl von Flüssigkristallanzeige (LCD)-Einheiten, die in einer Kachelkonfiguration zu einem gemeinsamen Anzeigebildschirm angeordnet sind. Die Einheiten zeigen gleichzeitig verschiedene Daten an, die durch die Kanalisierung bestimmt werden. Jeder Kanal steuert den Betrieb einer oder mehrerer Einheiten und stellt redundante Daten bereit, die bei Bedarf angezeigt werden.

Die US 2006/0150002 A1 offenbart ein System, das mit Informationsprozessoren von Steuer- und Bereitschaftssystemen ausgestattet ist, die miteinander verbunden sind, um miteinander zu kommunizieren. Der Informationsprozessor des Steuersystems führt eine power-on-self-test (POST)-Operation und eine Startoperation aus und weist die Ausführung einer POST-Operation an den Informationsprozessor des Standby-Systems nach Abschluss der Startoperation an. Indessen überwacht der Informationsprozessor des Standby-Systems eine Operation des Steuersystems, führt die POST-Operation bei Empfang der Anweisung von dem Steuersystem aus und fordert eine Synchronisation mit seiner eigenen Vorrichtung zu dem Informationsprozessor an des Steuersystems bei Beendigung der POST-Operation. Der Informationsprozessor des Steuersystems kopiert Informationen bezüglich der Startoperation, die von seiner eigenen Vorrichtung bei Empfang der Synchronisationsanforderung ausgeführt werden, wodurch eine synchrone Operation mit der Vorrichtung gestartet wird.

Eine Fahrinformationsanzeigevorrichtung gemäß der JPH 06211071 A ist mit einem Anzeigesteuerungsteil versehen, das Erfassungssignale von Sensoren empfängt; einem Anzeigesteuerabschnitt, der die Erfassungssignale der Sensoren und ein Anzeigeschalt-Auslösesignal ST empfängt und eine Hauptanzeigeschalteinrichtung und eine Hilfsanzeigeschalteinrichtung aufweist; einer Hauptanzeigetafel, die ein Anzeigesteuersignal von dem Anzeigesteuerteil empfängt; und einer Hilfsanzeigetafel, die ein Anzeigesteuersignal von dem Anzeigesteuerteil empfängt.

In der JP 2010136295 A ist eine Bildanzeigesteuervorrichtung beschrieben, die ist ausgestattet mit einer Kamera; einer Anzeigevorrichtung, die ein Aufnahmebild anzeigt, einem Kamerabedienteil, das einen Befehl zum Auswählen einer Kamera erteilt, die eine Ausgabe an die Anzeigevorrichtung vornimmt; und einem Kameraauswahlteil, das die Aufnahmebildausgabe an die Anzeigevorrichtung gemäß einer Reihenfolge des Kamerabetriebsteils umschaltet. Die Vorrichtung ist auch ausgestattet mit einem Kamerazustandserfassungsteil, das erfasst, ob die Kamera ein Bild aufnehmen kann; einer Kameraauswahlliste, die einen Vorrang der an die Anzeigevorrichtung ausgegebenen Kamera zeigt; und einem Kameraauswahlverarbeitungsteil, das die Kamera gemäß dem Vorrang der Kameraauswahlliste auswählt, wenn der Kamerazustandserfassungsteil bestimmt, dass eine Bildaufnahme unmöglich ist.

Beispielsweise kann die Anzeigevorrichtung eine Einparkhilfe umfassen, mit der ein rückwärtiger Bereich eines Kraftfahrzeugs durch als Kameras ausgebildete Datenerfassungsmittel erfassbar ist und über ein als Display ausgebildetes Datenausgabemittel dem Fahrzeugfahrer darstellbar ist. Darüber hinaus sind Anzeigevorrichtungen bekannt, bei denen Abstandssensoren vorgesehen sind oder bei denen Außenrückblickspiegel durch Kameras und Bildschirme ersetzt sind.

Bauteile und Baugruppen von Kraftfahrzeugen sind einem steten Verschleiß ausgesetzt. Es kann daher nie ganz vermieden werden, dass ein Datenerfassungsmittel, wie Sensor oder Kamera, ein Datenausgabemittel, wie Display oder Bildschirm, und/oder ein Datenkabel die jeweilige Funktion nicht weiter ausführen kann. Einem Fahrzeugfahrer fehlen solchen Falls Informationen, um die Verkehrssituation in gewohnter Weise zu überblicken.

Aufgabe der Erfindung ist, ein Verfahren sowie eine Vorrichtung, das bzw. die mit einem derartigen Verfahren betreibbar ist, vorzuschlagen, mit dem bzw. der die Redundanz der Datenerfassung und Datenausgabe innerhalb eines Kraftfahrzeugs verbessert ist.

Die Aufgabe ist durch ein Verfahren nach Anspruch 1 gelöst.

Folgende Schritte sind demnach in dem erfindungsgemäßen Verfahren zum Betreiben einer Anzeigevorrichtung für ein Kraftfahrzeug, mit mindestens einem ersten Datenerfassungsmittel, mit mindestens einem zweiten Datenerfassungsmittel, mit mindestens einem ersten Datenausgabemittel, das mit dem ersten Datenerfassungsmittel durch eine erste Datenleitung und mit dem zweiten Datenerfassungsmittel durch eine zweite Datenleitung verbunden ist und mit mindestens einer ersten Datenverarbeitungseinheit, vorzusehen:
a. Erfassen mindestens eines ersten Datums durch das erste Datenerfassungsmittel und Umwandeln des erstens Datums durch das erste Datenerfassungsmittel in ein erstes Signal und Erfassen eines zweiten Datums durch das zweite Datenerfassungsmittel und Umwandeln des zweiten Datums durch das zweite Datenerfassungsmittel in ein zweites Signal;
b. Senden des ersten Signals von dem ersten Datenerfassungsmittel an das erste Datenausgabemittel;
c. Erfassen durch die erste Datenverarbeitungseinheit, ob das erste Signal vom ersten Datenerfassungsmittel versendet und/oder vom ersten Datenausgabemittel empfangen und/oder ausgegeben wird;
d. Ausgeben des ersten Signals durch das erste Datenausgabemittel, wenn das erste Signal vom ersten Datenerfassungsmittel versendet und vom ersten Datenausgabemittel empfangen und ausgegeben wird, sonst:
e. Weiterleiten des zweiten Signals des zweiten Datenerfassungsmittels an das erste Datenausgabemittel und ausgeben des zweiten Signals durch das erste Datenausgabemittel.

Dadurch, dass durch die erste Datenverarbeitungseinheit erfasst wird, ob das erste Datenerfassungsmittel das erste Signal versendet und/oder ob das erste Signal von dem ersten Datenausgabemittel empfangbar und ausgebbar ist, und durch das automatische Weiterleiten des zweiten Signals an das erste Ausgabemittel ist gewährleistet, dass durch das erste Datenausgabemittel stets eine Information für den Fahrzeugfahrer ersichtlich ist. Hierdurch sind dem Fahrzeugfahrer stets Informationen zuführbar, die eine Einschätzung der Verkehrssituation erleichtern.

Die Anzeigevorrichtung kann die Funktion eines Außenspiegels des Kraftfahrzeugs umfassen. Durch das erfindungsgemäße Verfahren ist solchen Falls Redundanz geschaffen, so dass von einem Vorsehen eines Außenspiegels abgesehen werden kann. Das erste und/oder das zweite Ausgabemittel kann ein externes oder internes Display umfassen.

Grundsätzlich ist es denkbar, dass das erste Signal des ersten Datenerfassungsmittels und das zweite Signal des zweiten Datenerfassungsmittels einen nahezu übereinstimmenden Informationsgehalt umfassen.

Darüber hinaus ist denkbar, dass ein Teil des Informationsgehalts des zweiten Signals mit dem Informationsgehalt des ersten Signals übereinstimmt, bspw. wenn sich der durch das zweite Datenerfassungsmittel und der durch das erste Datenerfassungsmittel jeweils erfasster Bereich überschneiden.

Um zu gewährleisten, dass auch bei einem Ausfall des ersten Datenausgabemittels ein Bild für den Fahrzeugfahrer wahrnehmbar ist, erweist sich in Weiterbildung des erfindungsgemäßen Verfahrens als vorteilhaft, wenn das Verfahren nachfolgende Schritte umfasst:
a. Erfassen durch die erste Datenverarbeitungseinheit, ob das erste Signal und/oder ob das zweite Signal vom ersten Datenausgabemittel empfangen und/oder ausgegeben wird;
b. Senden des ersten Signals und/oder des zweiten Signals an ein zweites Datenausgabemittel der Anzeigevorrichtung, wenn weder das erste Signal noch das zweite Signal vom ersten Datenausgabemittel empfangbar und/oder ausgebbar ist;
c. Empfangen und Ausgeben des ersten Signals und/oder des zweiten Signals durch das zweite Datenausgabemittel.

Das erste Datenausgabemittel kann bspw. ein dem ersten Datenerfassungsmittel zugeordneter Bildschirm sein. Das Gleiche gilt für das zweite Datenausgabemittel. Darüber hinaus kann sowohl das erste Datenausgabemittel als auch das zweite Datenausgabemittel einen beliebigen, insbesondere schon vorhandenen, Bildschirm im Kraftfahrzeug umfassen, bspw. ein Navigationsgerät.

Darüber hinaus erweist es sich als vorteilhaft, wenn das Verfahren folgende Schritte umfasst:
a. Erfassen durch eine zweite Datenverarbeitungseinheit, ob die erste Datenverarbeitungseinheit funktionsfähig ist;
b. Übernahme der Funktion der ersten Datenverarbeitungseinheit durch die zweite Datenverarbeitungseinheit, wenn die erste Datenverarbeitungseinheit als nicht funktionsfähig erfasst wird.

Hierdurch ist gewährleistet, dass bei Ausfall der ersten Datenverarbeitungseinheit automatisch eine zweite Datenverarbeitungseinheit übernimmt. Hierdurch ist die Redundanz des Systems weiter erhöht.

Ferner umfasst das Verfahren nach der Erfindung folgende Schritte:
a. Senden des ersten Signals von dem ersten Datenerfassungsmittel an das erste Datenausgabemittel und Senden des zweiten Signals von dem zweiten Datenerfassungsmittel an das zweite Datenausgabemittel;
b. Erfassen durch die erste Datenverarbeitungseinheit und/oder durch die zweite Datenverarbeitungseinheit, ob das erste Signal des ersten Datenerfassungsmittels vom ersten Datenausgabemittel empfangen und/oder ausgegeben wird und/oder ob das zweite Signal des zweiten Datenerfassungsmittels vom zweiten Datenausgabemittel empfangen und/oder ausgegeben wird;
c. Ausgeben des ersten Signals und des zweiten Signals durch das erste Datenausgabemittel der Anzeigevorrichtung, wenn weder das erste Signal noch das zweite Signal vom zweiten Datenausgabemittel empfangbar und/oder ausgebbar ist oder ausgeben des ersten Signals und des zweiten Signals durch das zweite Datenausgabemittel der Anzeigevorrichtung, wenn weder das erste Signal noch das zweite Signal vom ersten Datenausgabemittel empfangbar und/oder ausgebbar ist.

Hierdurch ist es ermöglicht, wenn eine der Datenausgabemittel ausfällt, ein gesplittetes Bild auf einem vorhandenen Bildschirm oder Display darzustellen. Wenn bspw. das erste Datenerfassungsmittel einen ersten Außenrückblickspiegel ersetzt und das zweite Datenerfassungsmittel einen zweiten Außenrückblickspiegel, deren Ansichten jeweils in dem ersten Datenausgabemittel und/oder dem zweiten Datenausgabemittel dargestellt werden, kann solchen Falls durch einen Bildschirm beide Darstellungen ausgegeben werden.

Darüber hinaus wird die Aufgabe gelöst durch eine Anzeigevorrichtung für ein Kraftfahrzeug nach Anspruch 4 gelöst.

Durch das Vorsehen einer ersten Datenleitung und einer zweiten Datenleitung, die vom ersten Datenerfassungsmittel und dem zweiten Datenerfassungsmittel zum ersten Datenausgabemittel erstreckt sind, ist die Redundanz des Systems erhöht.

Die erste Datenverarbeitungseinheit ist bevorzugt zwischen dem ersten Datenerfassungsmittel und dem zweiten Datenerfassungsmittel sowie dem ersten Datenausgabemittel angeordnet. Solchen Falls kann die Datenverarbeitungseinheit eine Schaltung, mit der beispielsweise von der ersten Datenleitung auf die zweite Datenleitung umschaltbar ist, umfassen.

In Weiterbildung letztgenannten Erfindungsgedankens ist ein zweites Datenausgabemittel vorgesehen, das mit dem das erste Signal des ersten Datenerfassungsmittels mittels einer dritten Datenleitung und/oder mit dem das zweite Signal des zweiten Datenerfassungsmittels mittels einer vierten Datenleitung empfangbar und ausgebbar ist.

Die erfindungsgemäße Anzeigevorrichtung umfasst eine zweite Datenverarbeitungseinheit, die funktional mit der ersten Datenverarbeitungseinheit zusammenarbeitet und derart ausgebildet ist und mit der ersten Datenverarbeitungseinheit gekoppelt ist, dass sie zumindest die Funktion der ersten Datenverarbeitungseinheit übernimmt, wenn diese ausfällt.

Darüber hinaus ist bei einer Ausführungsform der erfindungsgemäßen Anzeigevorrichtung vorgesehen, dass durch ein manuell betätigbares Schaltmittel, mit dem manuell von der Ausgabe des ersten Signals auf die Ausgabe des zweiten Signals am erstem Datenausgabemittel und/oder am zweiten Datenausgabemittel schaltbar ist. Hierdurch ist die Ausgabe am ersten Datenausgabemittel und/oder am zweiten Ausgabemittel durch den Fahrzeugfahrer einstellbar.

Grundsätzlich können die erste, die zweite, die dritte und/oder die vierte Datenleitung beliebig ausgebildet sein. Es erweist sich jedoch als zweckmäßig, wenn die erste Datenleitung, die zweite Datenleitung, die dritte Datenleitung und/oder die vierte Datenleitung eine bidirektionale Verbindung umfassen.

Ferner erweist es sich als vorteilhaft, wenn mittels der ersten Datenverarbeitungseinheit und/oder der zweiten Datenverarbeitungseinheit ein gemeinsames Signal aus dem ersten Signal und dem zweiten Signal verarbeitbar und an das erste Datenausgabemittel und/oder das zweite Datenausgabemittel sendbar und dort empfangbar und ausgebbar ist.

Die erste Datenverarbeitungseinheit und/oder die zweite Datenverarbeitungseinheit können grundsätzlich beliebig ausgebildet sein. Es wird jedoch bevorzugt, wenn die erste Datenverarbeitungseinheit und/oder die zweite Datenverarbeitungseinheit einen WatchDog umfassen.

Solchen Falls können die erste Datenverarbeitungseinheit und/oder die zweite Datenverarbeitungseinheit zusammen mit dem ersten Datenerfassungsmittel und/oder dem zweiten Datenerfassungsmittel bzw. mit dem ersten Datenausgabemittel und/oder dem zweiten Datenausgabemittel ein gemeinsames Bauteil bilden.

Schließlich wird die Aufgabe durch ein Kraftfahrzeug mit einer erfindungsgemäßen Anzeigevorrichtung gelöst.

Die erfindungsgemäße Anzeigevorrichtung, das erfindungsgemäße Kraftfahrzeug sowie das erfindungsgemäße Verfahren zum Betreiben einer Anzeigevorrichtung für ein Kraftfahrzeug erweisen sich in mehrfacher Hinsicht als vorteilhaft:
Dadurch, dass bei Ausfall eines Datenerfassungsmittels, eines Datenausgabemittels, einer Datenleitung oder einer Datenverarbeitungseinheit jeweils ein zweites Datenerfassungsmittel, ein zweites Datenausgabemittel und/oder ein zweites Datenverarbeitungsmittel vorgesehen ist, ist die Redundanz des Systems erhöht. Hierdurch ist gewährleistet, dass dem Fahrzeugfahrer stets eine Information über das Verkehrsgeschehen zuführbar ist.

Weitere Merkmale, Einzelheiten und Vorteile der Erfindung ergeben sich aus dem beigefügten Patentansprüchen, aus der zeichnerischen Darstellung und nachfolgenden Beschreibung bevorzugter Ausführungsformen der erfindungsgemäßen Anzeigevorrichtung bzw. des erfindungsgemäßen Verfahrens zum Betreiben einer derartigen Anzeigevorrichtung.

In der Zeichnung zeigt:
- Figur 1: eine schematische Draufsicht auf ein erfindungsgemäßes Kraftfahrzeug mit einer erfindungsgemäßen Anzeigevorrichtung;
- Figur 2: ein schematisches Schaltbild einer Anzeigevorrichtung; und
- Figur 3: ein schematisches Schaltbild einer erfindungsgemäßen Anzeigevorrichtung.

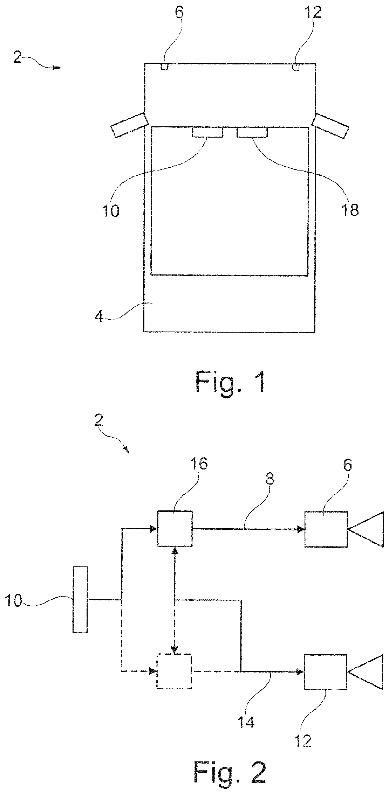

Figur 1 zeigt eine insgesamt mit dem Bezugszeichen 2 versehene Anzeigevorrichtung für ein Kraftfahrzeug 4. Die Anzeigevorrichtung 2 umfasst ein erstes Datenerfassungsmittel 6, von dem ein erstes Signal durch eine erste Datenleitung 8 (siehe Fig. 2) an ein erstes Datenausgabemittel 10 sendbar und durch das erste Datenausgabemittel 10 ausgebbar ist.

Darüber hinaus umfasst die erfindungsgemäße Anzeigevorrichtung 2 bei dem in Figur 1 dargestellten Ausführungsbeispiel ein zweites Datenerfassungsmittel 12 mit dem ein zweites Signal mittels einer zweiten Datenleitung 14 an das erste Datenausgabemittel 10 sendbar bzw. ausgebbar ist. Die Anzeigevorrichtung 2 umfasst ferner eine erste Datenverarbeitungseinheit 16, mit der entscheidbar ist, ob dem ersten Datenausgabemittel 10 das erste Signal des ersten Datenerfassungsmittel 6 oder das zweite Signal des zweiten Datenerfassungsmittels 12 zuführbar und von diesem empfangbar und ausgebbar ist.

Figur 1 zeigt die Anzeigevorrichtung 2 mit einem zweiten Datenausgabemittel 18, auf dem die Ausgabe des ersten Signals des ersten Datenerfassungsmittels 6 oder das zweite Signal des zweiten Datenerfassungsmittels 12 darstellbar ist.

Figur 2 zeigt ein schematisches Schaltbild einer anderen Anzeigevorrichtung 2. Durch die erste Datenverarbeitungseinheit 16 wird erkannt, ob durch das erste Datenerfassungsmittel 6 Daten aufgenommen werden. Erkennt die erste Datenverarbeitungseinheit 16, dass durch das erste Datenerfassungsmittel 6 keine Daten aufgenommen werden, bspw. weil kein erstes Signal über die erste Datenleitung in Richtung auf das erste Datenausgabemittel 10 versendet wird, und hierdurch bedingt automatisch das zweite Signal des zweiten Datenerfassungsmittels 12, das mittels der zweiten Datenleitung 14 teils mit der ersten Datenverarbeitungseinheit 16 verbunden ist.

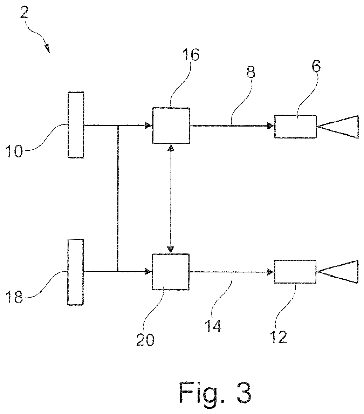

Figur 3 zeigt eine Ausführungsform der erfindungsgemäßen Anzeigevorrichtung, bei der ein zweites Datenausgabemittel 18 sowie eine zweite Datenverarbeitungseinheit 20 vorgesehen ist. Die zweite Datenverarbeitungseinheit 20 ist derart mit der ersten Datenverarbeitungseinheit 16 gekoppelt, dass die erste Datenverarbeitungseinheit 16 die Aufgabe der zweiten Datenverarbeitungseinheit 20 übernimmt, wenn diese ausfällt und umgekehrt.

Darüber hinaus ist durch das Vorsehen des zweiten Datenausgabemittels 18 die Redundanz erhöht. Wenn das erste Datenausgabemittel 10 ausfällt, können das erste Signal des ersten Datenerfassungsmittels 6 und das zweite Signal des zweiten Datenerfassungsmittels 12 an das zweite Datenausgabemittel 18 gesendet werden.

Die in der vorstehenden Beschreibung vorkommenden Ansprüche sowie die in der Zeichnung offenbarten Merkmale der Erfindung können sowohl einzeln, als auch in jeder beliebigen Kombination der Verwirklichung der Erfindung in Ihren verschiedenen Ausführungsformen wesentlich sein.

## Patentansprüche

1. Verfahren zum Betreiben einer Anzeigevorrichtung (2) für ein Kraftfahrzeug (4), mit mindestens einem ersten Datenerfassungsmittel (6), mit mindestens einem zweiten Datenerfassungsmittel (12), mit mindestens einem ersten Datenausgabemittel (10), das mit dem ersten Datenerfassungsmittel (6) durch eine erste Datenleitung (8) und mit dem zweiten Datenerfassungsmittel (12) durch eine zweite Datenleitung (14) verbunden ist, und mit mindestens einer ersten Datenverarbeitungseinheit (16), mit den Schritten:
a. Erfassen mindestens eines ersten Datums durch das erste Datenerfassungsmittel (6) und Umwandeln des erstens Datums durch das erste Datenerfassungsmittel (6) in ein erstes Signal und Erfassen eines zweiten Datums durch das zweite Datenerfassungsmittel (12) und Umwandeln des zweiten Datums durch das zweite Datenerfassungsmittel (12) in ein zweites Signal;
b. Senden des ersten Signals von dem ersten Datenerfassungsmittel (6) an das erste Datenausgabemittel (10);
c. Erfassen durch die erste Datenverarbeitungseinheit (16), ob das erste Signal vom ersten Datenerfassungsmittel (6) versendet und/oder vom ersten Datenausgabemittel (10) empfangen und/oder ausgegeben wird;
d. Ausgeben des ersten Signals durch das erste Datenausgabemittel (10), wenn das erste Signal vom ersten Datenerfassungsmittel (6) versendet und vom ersten Datenausgabemittel (10) empfangen und ausgegeben wird, sonst:
e. Weiterleiten des zweiten Signals des zweiten Datenerfassungsmittels (12) an das erste Datenausgabemittel (10) und Ausgeben des zweiten Signals durch das erste Datenausgabemittel (10);
f. Senden des ersten Signals von dem ersten Datenerfassungsmittel (6) an das erste Datenausgabemittel (10) und Senden des zweiten Signals von dem zweiten Datenerfassungsmittel (12) an ein zweites Datenausgabemittel (18);
g. Erfassen durch die erste Datenverarbeitungseinheit (16) und/oder durch eine zweite Datenverarbeitungseinheit (20), ob das erste Signal des ersten Datenerfassungsmittels (6) vom ersten Datenausgabemittel (10) empfangen und/oder ausgegeben wird und/oder ob das zweite Signal des zweiten Datenerfassungsmittels (12) vom zweiten Datenausgabemittel (18) empfangen und/oder ausgegeben wird; und
h. Ausgeben des ersten Signals und des zweiten Signals durch das erste Datenausgabemittel (10) der Anzeigevorrichtung (2), wenn weder das erste Signal noch das zweite Signal vom zweiten Datenausgabemittel (18) empfangbar und/oder ausgebbar ist, oder
Ausgeben des ersten Signals und des zweiten Signals durch das zweite Datenausgabemittel (18) der Anzeigevorrichtung (2), wenn weder das erste Signal noch das zweite Signal vom ersten Datenausgabemittel (10) empfangbar und/oder ausgebbar ist,
wobei, wenn eines der Datenausgabemittel (10, 18) ausfällt, ein gesplittetes Bild auf einem vorhandenen Bildschirm dargestellt wird, und
wobei, wenn das erste Datenerfassungsmittel (6) einen ersten Außenrückblickspiegel und das zweite Datenerfassungsmittel (12) einen zweiten Außenrückblickspiegel ersetzt, deren Ansichten jeweils in dem ersten Datenausgabemittel (10) und/oder dem zweiten Datenausgabemittel (18) dargestellt werden, durch einen Bildschirm beide Darstellungen ausgegeben werden.

2. Verfahren nach Anspruch 1, mit den Schritten:
a. Erfassen durch die erste Datenverarbeitungseinheit (16), ob das erste Signal und/oder ob das zweite Signal vom ersten Datenausgabemittel (10) empfangen und/oder ausgegeben wird;
b. Senden des ersten Signals und des zweiten Signals an das zweite Datenausgabemittel (18) der Anzeigevorrichtung (2), wenn weder das erste Signal noch das zweite Signal vom ersten Datenausgabemittel (10) empfangbar und/oder ausgebbar ist; und
c. Empfangen und Ausgeben des ersten Signals und des zweiten Signals durch das zweite Datenausgabemittel (18).

3. Verfahren nach Anspruch 1 oder 2, mit den Schritten:
a. Erfassen durch die zweite Datenverarbeitungseinheit (20), ob die erste Datenverarbeitungseinheit (16) funktionsfähig ist; und
b. Übernahme der Funktion der ersten Datenverarbeitungseinheit (16) durch die zweite Datenverarbeitungseinheit (20), wenn die erste Datenverarbeitungseinheit (16) als nicht funktionsfähig erfasst wird.

4. Anzeigevorrichtung (2) für ein Kraftfahrzeug (4), die für ein Betreiben mit einem Verfahren der Ansprüche 1 bis 3 ausgestaltet ist, mit
• mindestens einem ersten Datenerfassungsmittel (6), von dem ein erstes Signal durch eine erste Datenleitung (8) an ein erstes Datenausgabemittel (10) sendbar und durch das erste Datenausgabemittel (10) ausgebbar ist,
• mindestens einer der ersten Datenleitung (8) funktional zugeordneten ersten Datenverarbeitungseinheit (16), mit der zumindest erfassbar ist, ob vom ersten Datenerfassungsmittel (6) ein erstes Signal in Richtung auf das Datenausgabemittel (10, 18) sendbar ist und/oder ob das erste Signal von dem Datenausgabemittel (10, 18) empfangbar und ausgebbar ist,
• mindestens einem zweiten Datenerfassungsmittel (12), mit dem ein zweites Signal mittels einer zweiten Datenleitung (14) an das erste Datenausgabemittel (10) sendbar, empfangbar und ausgebbar ist,
• einem zweiten Datenausgabemittel (18), mit dem das erste Signal des ersten Datenerfassungsmittels (6) mittels einer dritten Datenleitung und/oder mit dem das zweite Signal des zweiten Datenerfassungsmittels (12) mittels einer vierten Datenleitung empfangbar und ausgebbar ist, und
• einer zweiten Datenverarbeitungseinheit (20), die funktional mit der ersten Datenverarbeitungseinheit (16) zusammenarbeitet und derart ausgebildet und mit der ersten Datenverarbeitungseinheit (16) gekoppelt ist, dass sie zumindest die Funktion der ersten Datenverarbeitungseinheit (16) übernimmt, wenn diese ausfällt.

5. Anzeigevorrichtung (2) nach Anspruch 4, **gekennzeichnet durch**
ein manuell betätigbares Schaltmittel, mit dem manuell von der Ausgabe des ersten Signals auf die Ausgabe des zweiten Signals am erstem Datenausgabemittel (10) und/oder am zweiten Datenausgabemittel (18) schaltbar ist.

6. Anzeigevorrichtung (2) nach Anspruch 4 oder 5, **dadurch gekennzeichnet, dass**
die erste Datenleitung (8), die zweite Datenleitung (14), die dritte Datenleitung und/oder die vierte Datenleitung eine bidirektionale Verbindung umfassen.

7. Anzeigevorrichtung (2) nach einem der Ansprüche 4 bis 6, **dadurch gekennzeichnet, dass** mittels der ersten Datenverarbeitungseinheit (16) und/oder der zweiten Datenverarbeitungseinheit (20) ein gemeinsames Signal aus dem ersten Signal und dem zweiten Signal verarbeitbar und an das erste Datenausgabemittel (10) und/oder das zweite Datenausgabemittel (18) sendbar und dort empfangbar und ausgebbar ist.

8. Anzeigevorrichtung (2) nach einem der Ansprüche 4 bis 7, **dadurch gekennzeichnet, dass** die erste Datenverarbeitungseinheit (16) und/oder die zweite Datenverarbeitungseinheit (20) einen WatchDog umfassen.

9. Kraftfahrzeug (4), das mindestens eine Anzeigevorrichtung (2) nach einem der Ansprüche 4 bis 8 umfasst.

## Claims

1. A method for operating a display device (2) for a motor vehicle (4), having at least one first data acquisition means (6), having at least one second data acquisition means (12), having at least one first data outputting means (10) which is connected to the first data acquisition means (6) by a first data line (8) and is connected to the second data acquisition means (12) by a second data line (14), and having at least one first data processing unit (16), having the following steps:
a. Detecting of at least one first datum by the first data acquisition means (6) and converting of the first datum by the first data acquisition means (6) into a first signal and detecting of a second datum by the second data acquisition means (12) and converting of the second datum by the second data acquisition means (12) into a second signal;
b. Transmitting of the first signal from the first data acquisition means (6) to the first data outputting means (10);
c. Detecting by the first data processing unit (16) whether the first signal is sent by the first data acquisition means (6) and/or is received and/or output by the first data outputting means (10);
d. Outputting of the first signal by the first data outputting means (10), if the first signal is sent by the first data acquisition means (6) and is received and output by the first data outputting means (10), otherwise:
e. Forwarding of the second signal of the second data acquisition means (12) to the first data outputting means (10) and outputting of the second signal by the first data outputting means (10);
f. Transmitting of the first signal from the first data acquisition means (6) to the first data outputting means (10) and transmitting of the second signal from the second data acquisition means (12) to a second data outputting means (18);
g. Detecting by the first data processing unit (16) and/or by a second data processing unit (20) whether the first signal of the first data acquisition means (6) is received and/or output by the first data outputting means (10) and/or whether the second signal of the second data acquisition means (12) is received and/or output by the second data outputting means (18); and
h. Outputting of the first signal and of the second signal by the first data outputting means (10) of the display device (2), if neither the first signal nor the second signal can be received and/or output by the second data outputting means (18), or
Outputting of the first signal and of the second signal by the second data outputting means (18) of the display device (2), if neither the first signal nor the second signal can be received and/or output by the first data outputting means (10),
wherein, if one of the data outputting means (10, 18) fails, a split image is displayed on an existing screen, and
wherein, if the first data acquisition means (6) replaces a first exterior rear-view mirror and the second data acquisition means (12) replaces a second exterior rear-view mirror, the views of which are each displayed in the first data outputting means (10) and/or the second data outputting means (18), both displays are output by a screen.

2. The method according to claim 1, having the following steps:
a. Detecting by the first data processing unit (16) whether the first signal and/or whether the second signal is received and/or output by the first data outputting means (10);
b. Transmitting of the first signal and of the second signal to the second data outputting means (18) of the display device (2), if neither the first signal nor the second signal can be received and/or output by the first data outputting means (10); and
c. Receiving and outputting of the first signal and of the second signal by the second data outputting means (18).

3. The method according to claim 1 or 2, having the following steps:
a. Detecting by the second data processing unit (20) whether the first data processing unit (16) is functional; and
b. Assuming of the function of the first data processing unit (16) by the second data processing unit (20), if the first data processing unit (16) is detected to not be functional.

4. A display device (2) for a motor vehicle (4), which is designed for operation with a method of claims 1 to 3, having
• at least one first data acquisition means (6), from which a first signal can be transmitted by a first data line (8) to a first data outputting means (10) and can be output by the first data outputting means (10),
• at least one first data processing unit (16) which is functionally assigned to the first data line (8), with which it can at least be detected whether a first signal can be transmitted by the first data acquisition means (6) in the direction of the data outputting means (10, 18) and/or whether the first signal can be received and output by the data outputting means (10, 18),
• at least one second data acquisition means (12), with which a second signal can be transmitted, can be received and can be output by means of a second data line (14) to the first data outputting means (10),
• a second data outputting means (18), with which the first signal of the first data acquisition means (6) can be received and output by means of a third data line and/or with which the second signal of the second data acquisition means (12) can be received and output by means of a fourth data line, and
• a second data processing unit (20) which functionally cooperates with the first data processing unit (16) and which is configured and coupled to the first data processing unit (16) in such a way that it at least assumes the function of the first data processing unit (16) if the latter fails.

5. The display device (2) according to claim 4, **characterized by**
a switching means which can be operated manually and with which it is possible to manually switch from the output of the first signal to the output of the second signal at the first data outputting means (10) and/or at the second data outputting means (18).

6. The display device (2) according to claim 4 or 5, **characterised in that**
the first data line (8), the second data line (14), the third data line and/or the fourth data line comprise a bidirectional connection.

7. The display device (2) according to any one of claims 4 to 6, **characterised in that**
a joint signal from the first signal and the second signal can be processed by means of the first data processing unit (16) and/or the second data processing unit (20) and can be transmitted to the first data outputting means (10) and/or the second data outputting means (18), and can be received and output there.

8. The display device (2) according to any one of claims 4 to 7, **characterised in that** the first data processing unit (16) and/or the second data processing unit (20) comprise(s) a watchdog.

9. A motor vehicle (4) which comprises at least one display device (2) according to any one of claims 4 to 8.

## Revendications

1. Procédé pour exploiter un dispositif d'affichage (2) pour un véhicule à moteur (4), comprenant au moins un premier moyen d'acquisition de données (6), comprenant au moins un deuxième moyen d'acquisition de données (12), comprenant au moins un premier moyen d'émission de données (10), qui est raccordé avec le premier moyen d'acquisition de données (6) par une première ligne de données (8) et avec le deuxième moyen d'acquisition de données (12) par une deuxième ligne de données (14), et comprenant au moins une première unité de traitement de données (16), comprenant les étapes suivantes :
a. l'acquisition d'au moins une première donnée par le premier moyen d'acquisition de données (6) et la transformation de la première donnée par le premier moyen d'acquisition de données (6) en un premier signal et l'acquisition d'une deuxième donnée par le deuxième moyen d'acquisition de données (12) et la transformation de la deuxième donnée par le deuxième moyen d'acquisition de données (12) en un deuxième signal ;
b. l'envoi du premier signal depuis le premier moyen d'acquisition de données (6) vers le premier moyen d'émission de données (10) ;
c. la détermination par la première unité de traitement de données (16) de si le premier signal est envoyé par le premier moyen d'acquisition de données (6) et/ou reçu et/ou émis par le premier moyen d'émission de données (10) ;
d. l'émission du premier signal par le premier moyen d'émission de données (10) lorsque le premier signal est envoyé par le premier moyen d'acquisition de données (6) et reçu et émis par le premier moyen d'émission de données (10) ; ou sinon :
e. l'acheminement du deuxième signal du deuxième moyen d'acquisition de données (12) vers le premier moyen d'émission de données (10) et l'émission du deuxième signal par le premier moyen d'émission de données (10) ;
f. l'envoi du premier signal depuis le premier moyen d'acquisition de données (6) vers le premier moyen d'émission de données (10) et l'envoi du deuxième signal depuis le deuxième moyen d'acquisition de données (12) vers un deuxième moyen d'émission de données (18) ;
g. la détermination par la première unité de traitement de données (16) et/ou par une deuxième unité de traitement de données (20) de si le premier signal du premier moyen d'acquisition de données (6) est reçu et/ou émis par le premier moyen d'émission de données (10) et/ou de si le deuxième signal du deuxième moyen d'acquisition de données (12) est reçu et/ou émis par le deuxième moyen d'émission de données (18) ; et
h. l'émission du premier signal et du deuxième signal par le premier moyen d'émission de données (10) du dispositif d'affichage (2) lorsque ni le premier signal, ni le deuxième signal ne peut être reçu et/ou émis par le deuxième moyen d'émission de données (18), ou
l'émission du premier signal et du deuxième signal par le deuxième moyen d'émission de données (18) du dispositif d'affichage (2) lorsque ni le premier signal, ni le deuxième signal ne peut être reçu et/ou émis par le premier moyen d'émission de données (10),
lorsqu'un des moyens d'émission de données (10, 18) fait défaillance, une image divisée étant affichée sur un écran présent, et
lorsque le premier moyen d'acquisition de données (6) remplace un premier rétroviseur extérieur et le deuxième moyen d'acquisition de données (12) remplace un deuxième rétroviseur extérieur, dont les vues sont à chaque fois représentées dans le premier moyen d'émission de données (10) et/ou le deuxième moyen d'émission de données (18), les deux représentations étant émises par un écran.

2. Procédé selon la revendication 1, comprenant les étapes suivantes :
a. la détermination par la première unité de traitement de données (16) de si le premier signal et/ou de si le deuxième signal est reçu et/ou émis par le premier moyen d'émission de données (10) ;
b. l'envoi du premier signal et du deuxième signal vers le deuxième moyen d'émission de données (18) du dispositif d'affichage (2) lorsque ni le premier signal, ni le deuxième signal ne peut être reçu et/ou émis par le premier moyen d'émission de données (10) ; et
c. la réception et l'émission du premier signal et du deuxième signal par le deuxième moyen d'émission de données (18).

3. Procédé selon la revendication 1 ou 2, comprenant les étapes suivantes :
a. la détermination par la deuxième unité de traitement de données (20) de si la première unité de traitement de données (16) est fonctionnelle ; et
b. la prise en charge de la fonction de la première unité de traitement de données (16) par la deuxième unité de traitement de données (20) lorsque la première unité de traitement de données (16) est déterminée comme non fonctionnelle.

4. Dispositif d'affichage (2) pour un véhicule à moteur (4), qui est configuré pour une exploitation avec un procédé selon les revendications 1 à 3, comprenant :
• au moins un premier moyen d'acquisition de données (6), par lequel un premier signal peut être envoyé par une première ligne de données (8) vers un premier moyen d'émission de données (10) et peut être émis par le premier moyen d'émission de données (10),
• au moins une première unité de traitement de données (16) affectée fonctionnellement à la première ligne de données (8), avec laquelle il peut au moins être déterminé si un premier signal peut être envoyé par le premier moyen d'acquisition de données (6) dans la direction du moyen d'émission de données (10, 18) et/ou si le premier signal peut être reçu et émis par le moyen d'émission de données (10, 18),
• au moins un deuxième moyen d'acquisition de données (12), avec lequel un deuxième signal peut être envoyé au moyen d'une deuxième ligne de données (14) vers le premier moyen d'émission de données (10), reçu et émis,
• un deuxième moyen d'émission de données (18), avec lequel le premier signal du premier moyen d'acquisition de données (6) peut être reçu et émis au moyen d'une troisième ligne de données et/ou avec lequel le deuxième signal du deuxième moyen d'acquisition de données (12) peut être reçu et émis au moyen d'une quatrième ligne de données, et
• une deuxième unité de traitement de données (20), qui coopère fonctionnellement avec la première unité de traitement de données (16) et est configurée et couplée avec la première unité de traitement de données (16) de telle sorte qu'elle prenne en charge au moins la fonction de la première unité de traitement de données (16) lorsque celle-ci fait défaillance.

5. Dispositif d'affichage (2) selon la revendication 4, **caractérisé par** :
un moyen de commutation actionnable manuellement, avec lequel on peut commuter manuellement de l'émission du premier signal à l'émission du deuxième signal vers le premier moyen d'émission de données (10) et/ou vers le deuxième moyen d'émission de données (18).

6. Dispositif d'affichage (2) selon la revendication 4 ou 5, **caractérisé en ce que** la première ligne de données (8), la deuxième ligne de données (14), la troisième ligne de données et/ou la quatrième ligne de données comprennent une liaison bidirectionnelle.

7. Dispositif d'affichage (2) selon l'une quelconque des revendications 4 à 6, **caractérisé en ce qu'**un signal commun constitué par le premier signal et le deuxième signal peut être traité au moyen de la première unité de traitement de données (16) et/ou de la deuxième unité de traitement de données (20), et peut être envoyé vers le premier moyen d'émission de données (10) et/ou le deuxième moyen d'émission de données (18) et peut y être reçu et émis.

8. Dispositif d'affichage (2) selon l'une quelconque des revendications 4 à 7, **caractérisé en ce que** la première unité de traitement de données (16) et/ou la deuxième unité de traitement de données (20) comprennent un WatchDog.

9. véhicule automobile (4), qui comprend au moins un dispositif d'affichage (2) selon l'une quelconque des revendications 4 à 8.
